**Europäisches Patentamt**

**European Patent Office**

**Office européen des brevets**

(19)

(11) Veröffentlichungsnummer: **0 077 474**
**B1**

## EUROPÄISCHE PATENTSCHRIFT

(12)

(45) Veröffentlichungstag der Patentschrift:
11.06.86

(51) Int. Cl.⁴: **A 01 D 90/04**

(21) Anmeldenummer: **82108866.3**

(22) Anmeldetag: **24.09.82**

(54) Schneidwerk für Selbstladeerntewagen.

(30) Priorität: **19.10.81 DE 3141414**

(43) Veröffentlichungstag der Anmeldung:
**27.04.83 Patentblatt 83/17**

(45) Bekanntmachung des Hinweises auf die Patenterteilung:
**11.06.86 Patentblatt 86/24**

(84) Benannte Vertragsstaaten:
**AT CH DE FR GB LI NL**

(56) Entgegenhaltungen:
**EP - A - 0 028 395**
**DE - A - 2 834 931**

(73) Patentinhaber: **Klöckner-Humboldt-Deutz AG**
**Zweigniederlassung Fahr, D-7702 Gottmadingen (DE)**

(72) Erfinder: **Silber, Wilhelm, Dipl.-Ing., Petersburg 10,**
**D-7701 Randegg (DE)**

(74) Vertreter: **Haft, Uwe Michael, Dipl.-Phys. et al,**
**Patentanwälte Haft, Berngruber, Czybulka**
**Hans-Sachs-Strasse 5, D-8000 München 5 (DE)**

LIBER, STOCKHOLM 1986

## Beschreibung

Die vorliegende Erfindung betrifft ein Schneidwerk für Selbstlade-Erntewagen, das in einem der Aufnahme von Halmgut dienenden Förderkanal vorgesehen ist und das eine Vielzahl von in ihrer Schneidstellung in den Förderkanal ragenden und in mindestens einer Reihe angeordneten sowie schwenkbar gelagerten Messern enthält, die mittels federbelasteter Messerhebel in ihrer Schneidstellung gehalten werden und entgegen der Federbelastung bis zu einer Stellung verschwenkbar sind, in der sie keine Schneidwirkung auf das Halmgut ausüben, wobei die Messerhebel wenigstens einer Messerreihe in etwa ihrer Mitte drehbar an einem festen Bolzen gelagert sind.

Derartige Selbstlade-Erntewagen eignen sich insbesondere für landwirtschaftliche Betriebe mit starkem Futterbauanteil, und zwar sowohl für die Silagebereitung als auch für tägliches Grünfutterholen und Dürrfutterholen, z.B. Heu. Beim Aufnehmen mittels einer meist hydraulisch verschwenkbaren Aufnahmevorrichtung (Pick-up), wird oftmals ein Schneiden des geernteten Futters verlangt, z.B. zum Silieren, wobeieine Schnittlänge von 40 mm sich als vorteilhaft für die Vergärung erwiesen hat. Ein Si1iergut von 40 mm läßt sich besonders gut laden sowie ebenfalls gut ent1aden, weiterbefördern und silieren.

Für andere Zwecke, z.B. beim Ernten von Grüngut und Dürrgut, ist ein derartiger Kurzschnitt jedoch nicht erwünscht. Das Gut soll dann nur langgeschnitten oder ungeschnitten bleiben, wozu eine Änderung der Schnittlänge notwendig ist, die gegebenenfalls mehrmals am Tag zu verändern ist, wenn z.B. morgens Grüngut und später Welksilage geerntet wird. Ein weiteres Problem entsteht beim Auftreffen von Fremdkörpern auf die einzelnen Messer, die, um dabei nicht beschädigt zu werden, ausschwenken müssen, um so den Fremdkörper passieren zu lassen.

Ein Schneidwerk der eingangs näher genannten Art ist aus der EP-A-28395 bekannt, bei der das Schneidwerk eine Vielzahl von in ihrer Arbeitsstellung in den Förderkanal eines Selbstlade-Erntewagens hineinragenden und quer zum Kanal entgegen der Rückstellwirkung einer Federanordnung drehbeweglich gelagerten und beim Auftreffen von Fremdkörpern vorübergehend ausweichenden einzelnen Messern enthält. Um sowohl ein Einstellen der Schnittbreite als auch einen Schutz gegen Fremdkörpereinwirkung zu ermöglichen, sind die Messer aus der Arbeitsstellung in eine Außerbetriebsstellung, in der sie den Förderkanal vollständig freigeben, von Hand bis in eine Raststellung überführbar. Zu diesem Zweck besitzen die Messer auf der Rückseite anschließend an die Raststellung jeweils eine Kurvenbahn auf der jeweils eine federbelastete Rolle läuft. Bei dieser bekannten Schneidvorrichtung wird die Schnittbreite des Halmguts durch Ausschwenken von Hand einzelner Messer bis in ihre Raststellung dem jeweiligen Bedarfsfall angepaßt. Selbsttätiges Ausschwenken der Messer aufgrund des Auftretens eines Fremdkörpers erfolgt bis zu einer Stellung, die nicht der Raststellung entspricht, so daß die Messer selbsttätig in ihre Arbeitsstellung zurückgeführt werden, sofern der Fremdkörper das Messer passiert hat.

Um nun die Einstellung einer beliebigen Schnittbreite vornehmen zu können, muß sich der Benutzer unter den Selbstlade-Erntewagen oder in den Laderaum desselben begeben und die einzelnen Messer von Hand unter Zuhilfenahme eines Hebels bis in ihre Raststellung verschwenken, so daß die übrig bleibenden, in den Förderkanal ragenden Messer, die neue Schnittbreite bestimmen. Eine derartige Handhabung ist jedoch umständlich, schwer und zeitaufwendig sowie für den Benutzer nicht ganz ungefährlich, insbesondere bei Hanglagen.

Der vorliegenden Erfindung liegt die Aufgabe zugrunde, ein Schneidwerk für Selbstlade-Erntewagen zu schaffen, das obige Nachteile vermeidet und das einfach und wirkungsvoll eine bestimmte Anzahl von vorgegebenen Schnittbreiten einzustellen erlaubt, ohne daß der Benutzer sich unter den Erntewagen oder in den Laderaum zu begeben hat, um dort manuelle Einstellungen vornehmen zu müssen.

Ausgehend von einem Schneidwerk der eingangs näher genannten Art wird zur Lösung dieser Aufgabe vorgeschlagen, daß der Messerreihe eine Schaltquelle zugeordnet ist, die mit einer der Anzahl der Messer entsprechenden Anzahl von direkt den Messerhebeln zugeordneten Kurvenscheiben versehen ist, die in bezug auf den Umfang der Schaltwelle versetzt zueinander angeordnet sind und daß die Schaltwelle mit einer Drehvorrichtung verbunden ist.

Vorteilhafterweise weist jede Kurvenscheibe eine Hubkurve, einen zentrischen Teil und eine Senkkurve auf.

Die Drehvorrichtung für die Schaltwelle kann entweder ein Stirnrad- oder Schneckenradgetriebe sein, oder eine Gewindezug- bzw. Druckstange mit Handratsche, oder aber eine Gewindezug- oder Druckstange mit einem Druckzylinder oder aber ein Stufenantrieb mit einem Klinkengesperre und einem Zackenrad, die über eine Zugstange mit der über Hydraulikzylinder verschwenkbaren Aufnahmevorrichtung für das Halmgut verbunden sein können.

Besonders vorteilhaft ist es, wenn dem Zackenrad ein drehbares Stellsegment zugeordnet ist, das unter der Krafteiner Feder am Zackenrad anliegt und in dieses einrastbar ist, wobei das Stellsegment einen Abschnitt aufweist, welcher mindestens die Breite einer Zahnlücke des Zackenrades aufweist und im Bereich dieses Abschnittes über die äußere Kante des Zackenrades hinausragt und in den Wirkungsbereich einer Vorschubklinke eingreift.

Bei einem besonders vorteilhaften Ausführungsbeispiel gemäß der Erfindung ist eine Messerreihe gebildet aus mehreren Messergruppen, wobei die Kurvenscheiben einer jeden Messergruppe derart zueinander versetzt sind, daß die Ausschwenkung der nächstfolgenden Messergruppe in eine Außerbetriebsstellung erst einsetzt, wenn die Ausschwenkung der vorhergehenden Gruppe erfolgt ist.

Um zu verhindern, daß sämtliche ausgeschwenkte Messer bei weiterer Betätigung der Schaltwelle schlagartig in die Schneidstellung vorschnellen, ist es besonders günstig, wenn die Schaltwelle mit einer geeigneten Bremsvorrichtung versehen ist, um die Vorschnellbewegung der ausgeschwenkten Messer zu verlangsamen.

Mit der Erfindung wird also der Vorteil erzielt, die bei der Bergung von Dürrgut, Grüngut und Welksilage erforderlichen, sehr hohen Lade- und Transportleistungen bequem und einfach voll auszunutzen und den Selbstlade-Erntewagen mit wenigen Handgriffen auf unterschiedliche Schnittlängen einzustellen. Insbesondere bei Verwendung eines Klinkengesperres mit Zackenrad als Drehvorrichtung für die Schaltwelle in Verbindung mit der vorhandenen hydraulischen Verschwenkung der Aufnahmevorrichtung kann eine Schnittlängenverstellung dadurch erfolgen, daß die Aufnahmevorrichtung (Pick-up) einmal oder mehrfach angehoben und abgesenkt wird, wodurch die Zugstange die in Verbindung mit einer Vorschubklinke des Klinkenradgesperres intermittierende Bewegungen ausführt. Bei einer geeigneten Versetzung der einzelnen Kurvenscheiben wird bei jedem Anheben immer jedes zweite Messer ausgeklappt, so daß sich bei jeder Stufe die Schnittlänge verdoppelt. Bei einem Messerabstand von z.B. 80 mm in einer Reihe und bei Vorsehen einer ersten Messerreihe, die üblicherweise als Zusatzschneidwerk ausgestaltet ist und vollständig eingeschwenkt oder ausgeschwenkt werden kann und unter der Annahme, daß 18 Messer pro Messerreihe vorgesehen sind, kann unter Einsatz des Zusatzschneidwerks eine Schnittbreite von 40 mm erzielt werden. Durch Ausschwenken des Zusatzschneidwerks (d.h. der ersten Messerreihe) verbleiben noch 18 Messer im Förderkanal zum Schneiden des Erntegutes, wobei eine Schnittbreite von 80 mm erzielt wird. Durch Verdrehung der Schaltwelle in ihre erste Stellung wird nun jedes zweite Messer ausgeklappt, so daß noch 9 Messer in den Förderkanal ragen und damit eine Schnittbreite von 160 mm verbleibt. Eine weitere Betätigung der Schaltwelle verschwenkt nun jedes zweite der verbleibenden Messer bis in deren Außerbetriebsstellung, so daß noch 5 Messer in den Förderkanal ragen und damit eine Schnittbreite von 320 mm erzielbar ist. Eine weitere Verdrehung der Schaltwelle bewirkt, daß alle Messer bis in ihre Außerbetriebsstellung verschwenkt sind, wodurch das Ladegut ungeschnitten bleibt. Bei weiterer Betätigung der Schaltwelle klappen nun sämtliche ausgeschwenkte Messer in ihre Schneidstellung zurück.

Im folgenden wird die Erfindung anhand der Zeichnung näher erläutert, in der ein vorteilhaftes Ausführungsbeispiel dargestellt ist. Es zeigen:

Figur 1 eine schematische Seitenansicht eines Selbstlade-Erntewagens mit dem erfindungsgemäßen Schneidwerk,

Figur 2 eine vergrößerte Darstellung des Schneidwerks,

Figur 3 eine vergrößerte Seitenansicht einer erfindungsgemäßen Drehvorrichtung für die Schaltwelle, und

Figur 4 eine Schnittdarstellung IV-IV nach Figur 3.

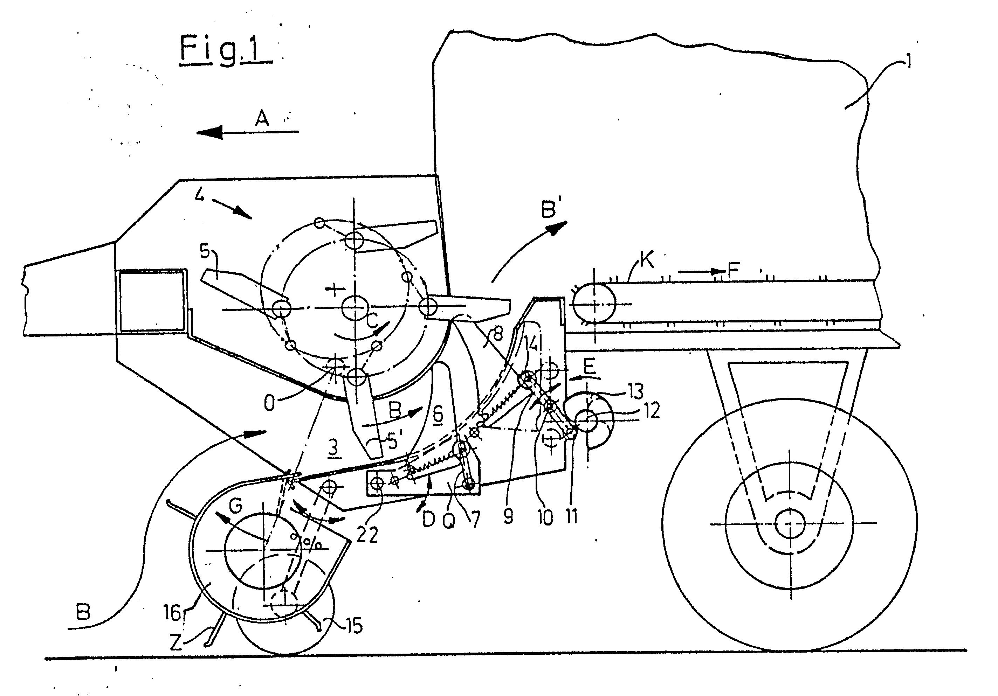

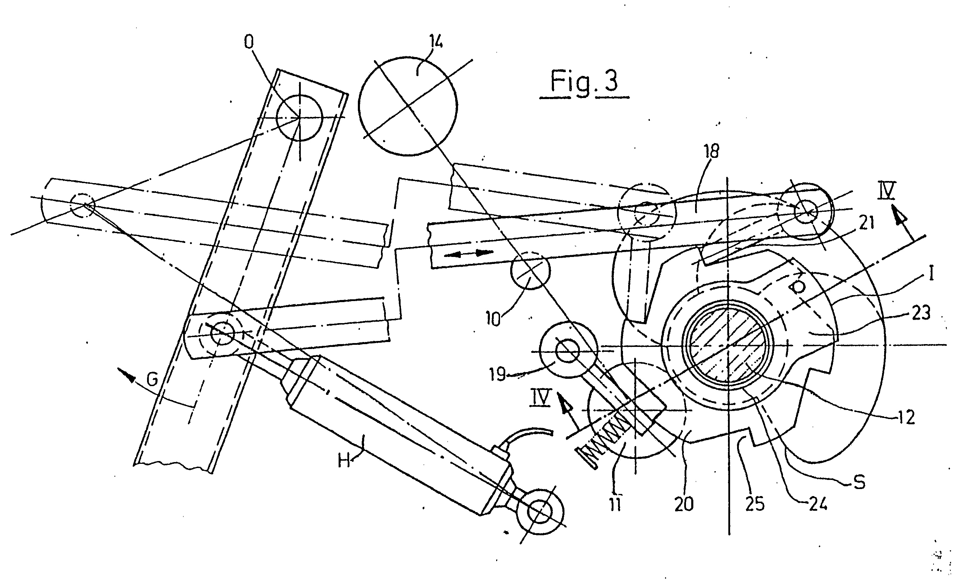

Figur 1 zeigt schematisch den vorderen Teil eines Selbstlade-Erntewagens 1, der sich in Pfeilrichtung A bewegt. Das bereits gemähte Ladegut wird von der Aufnahmevorrichtung (Pick-up) 16 in Richtung der Pfeile B, B' durch einen Förderkanal 3 hindurch in das Innere des Ladewagens 1 befördert. Die Aufnahmevorrichtung 16 kann z.B. in Richtung des Pfeils G über wie z.B. in Figur 3 dargestellte links und rechts angeordnete Hydraulikzylinder H um den Punkt O verschwenkt werden. Mit 15 ist ein verstellbares Tastrad bezeichnet, durch welches der Abstand der Zinken Z zum Boden fixiert wird.

Zum Förderkanal 3 ist eine Fördervorrichtung 4 vorgesehen, die z.B. ein Rechenkettenförderer oder wie im gezeigten Beispiel ein Trommelförderer sein kann mit einer Vielzahl von Förderzinken 5, 5', die in den Förderkanal beim Umlauf eingreifen und zum Transport des Ladegutes in der durch den Pfeil B angegebenen Richtung dienen. Das von der Aufnahmevorrichtung 16 aufgenommene, dem Förderkanal 3 zugeführte Ladegut, wird von den Förderzinken 5, 5' in gleich große Portionen dosiert und in gleichmäßigem Fließverfahren in den Laderaum des Selbstlade-Erntewagens 1 geführt. Die Drehrichtung der Fördervorrichtung 4 ist durch den Pfeil C angegeben. Im Erntewagen selbst ist ein Kratzboden K angeordnet, der das aufgenommene Ladegut in Richtung des Pfeiles F zu seinem hinteren Ende befördern kann.

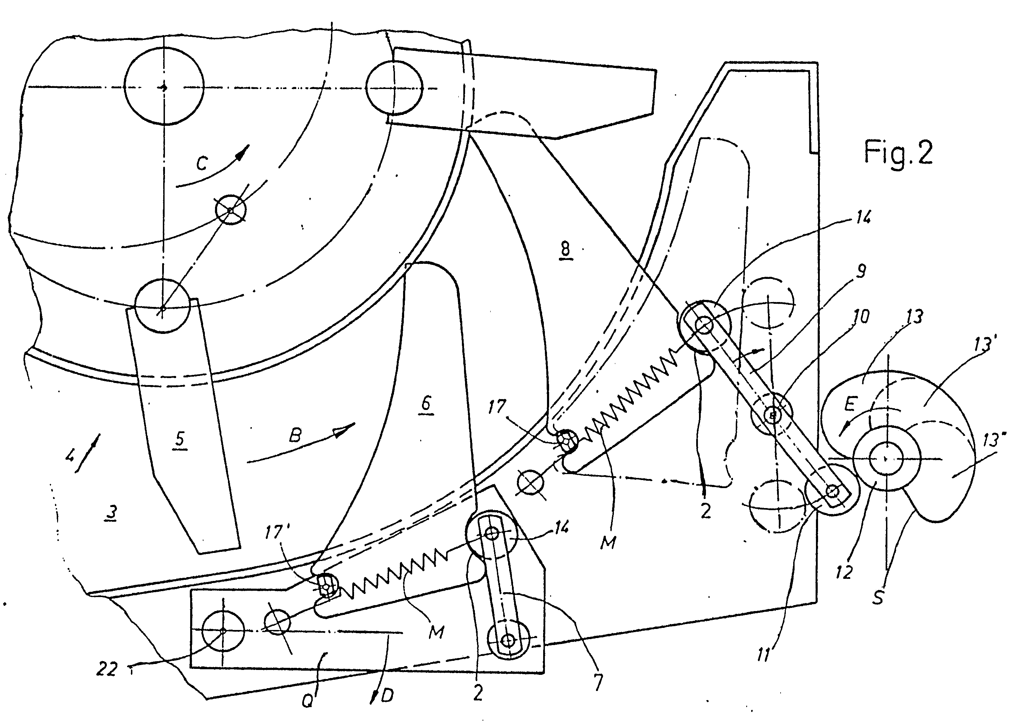

In den Förderkanal 3 ragen zwei quer zum Förderkanal angeordnete Reihen schwenkbar gelagerte Messer zum Zerkleinern des Ladegutes. Ein zur unteren Reihe gehörendes Messer 6 und ein zur oberen Reihe gehörendes Messer 8 mit einem Drehpunkt 17' bzw. 17 (Figur 2) sind jeweils auf Traversen so angeordnet, daß die doppelarmigen Förderzinken 5, 5' um sie herumgreifen.

Mit 7 ist ein Messerhebel für mehrere in Reihe nebeneinander angeordnete untere Messer 6 bezeichnet, wobei der Messerhebel 7 an seinem oberen Ende, wie üblich, eine Messerrolle 14 trägt, welche zusammen mit geeigneten Federn M die bekannte Überlastsicherung und Rückführeinrichtung für die Messer 6 darstellt. Dabei ist für jedes Messer 6 ein eigener Messerhebel 7 vorgesehen. Die unteren Messer 6 können in herkömmlicher Art und Weise als ganzes um den Drehpunkt 22 einer Quertraverse Q, auf welcher die Messer 6 über die Drehpunkte 17' schwenkbar gelagert sind, aus dem Förderkanal 3 verschwenkt werden, so daß die Schnittbreite im Kanal verdoppelt wird.

Mit 9 sind die Messerhebel für die oberen Messer 8 bezeichnet, wobei ebenfalls für jedes Messer ein eigener Messerhebel vorgesehen ist. Die Messerhebel 9 tragen an ihrem oberen Ende eine federbelastete Messerrolle 14, die in einer Vertiefung 2 am Rücken der Messer 8 einrastet. Auch hier ist also die bekannte Überlastsicherung und Rückführeinrichtung für jedes Messer 8 der oberen Reihe gewährleistet, so daß diese beim Auftreffen eines Fremdkörpers nach hinten verschwenken und nach Passieren dieses Fremdkörpers durch die Federn M wieder in ihre Arbeitsstellung verschwenkt werden. Die Messerhebel 9 für die oberen Messer 8 sind nun inihrer Mitte an einem Drehpunkt 10 gelenkig gelagert, um den sie unter dem Einfluß einer hinter der Messerreihe gelagerten Schaltwelle 12 verschwenkt werden können.

Die Schaltwelle 12 trägt für jedes Messer eine Kurvenscheibe 13, 13', 13'', die unterschiedlich ausgestaltet sein können. Die Kurvenscheiben sind dabei so zueinander versetzt (z.B. 90° oder 60°), daß die Ausschwenkung der nächsten Messergruppe erst einsetzt, wenn die vorherige Ausschwenkung annähernd oder ganz abgeschlossen ist. Die wirksame auf die Schaltrolle 11 des Messerhebels 9 wirkende Außenkontur der Kurvenscheibe weist eine Hubkurve, z.B. einen Kreisbogen oder eine Spirale auf, sowie einen zentrischen Teil und eine eventuell gerade Senkkurve S.

Durch geeignetes Verdrehen der Schaltwelle 12 in Richtung des Pfeiles E kann durch Einwirkung der versetzt zueinander angeordneten Kurvenscheiben 13 auf eine Anzahl von Messerhebeln 9 eine bestimmte Anzahl von Messern 8 bzw. eine Messergruppe aus dem Förderkanal 3 in eine Außerbetriebsstellung (strichpunktierte Darstellung) zurückgeschwenkt werden, z.B. jedes zweite Messer, so daß die Schnittbreite verdoppelt wird. Im gezeigten Beispiel werden durch das Verdrehen der Schaltwelle 12 bzw. der Kurvenscheiben 13 ein Drittel der Messerhebel 9 nach rechts verschwenkt und somit auch die federbelasteten Rollen 14 vom Messerrücken abgehoben. Dadurch schwenken die Messer 8 infolge ihres Gewichtes und der Lage ihres Schwerpunktes um ihre Schwenkachse 17 in die strichpunktierte Lage, wobei ihre unterste Schwenklage durch die Endlage der Rollen 14 begrenzt wird. Durch weiteres Verdrehen der Schaltwelle 12 um einen Schritt wirken nun die Kurvenscheiben 13', z.B. auf jedes zweite der noch verbleibenden Messer, so daß diese ebenfalls ausgeschwenkt werden und die Schnittbreite erneut verdoppelt wird. Ein weiteres Verdrehen der Schaltwelle 12 um einen Schritt bewirkt, daß nun sämtliche Messer durch das Verdrehen der Kurvenscheibe 13, 13', 13'' aus dem Förderkanal 3 ausgeschwenkt werden, so daß das Ladegut ungeschnitten den Förderkanal passiert und in das Innere des Ladewagens gefördert wird. Sollte ein Messer infolge leichter Verklemmung nicht aufgrund seines Eigengewichtes ausschwenken, so erfolgt die Ausschwenkbewegung automatisch beim Laden durch den Ladedruck des Erntegutes.

Zur Betätigung der Schaltwelle 12 gibt es verschiedene Möglichkeiten. Ein direktes manuelles Verdrehen der Schaltwelle 12 ist aufgrund des hohen Drehmomentes und der vielen zu spannenden Messerfedern M nicht möglich. Hingegen kann eine indirekte Handbetätigung mit Übersetzungsgetriebe, z.B. mittels eines Stirnrad- oder Schneckenradgetriebes erfolgen, wozu jedoch noch ein erheblicher Kraftaufwand erforderlich ist.

Auch eine indirekte Handbetätigung über eine Gewindezugoder Druckstange mit Handratsche ist möglich, wobei in diesem Fall die Kurvenscheibe jedoch eine relativ steile Hubkurve aufweisen müssen.

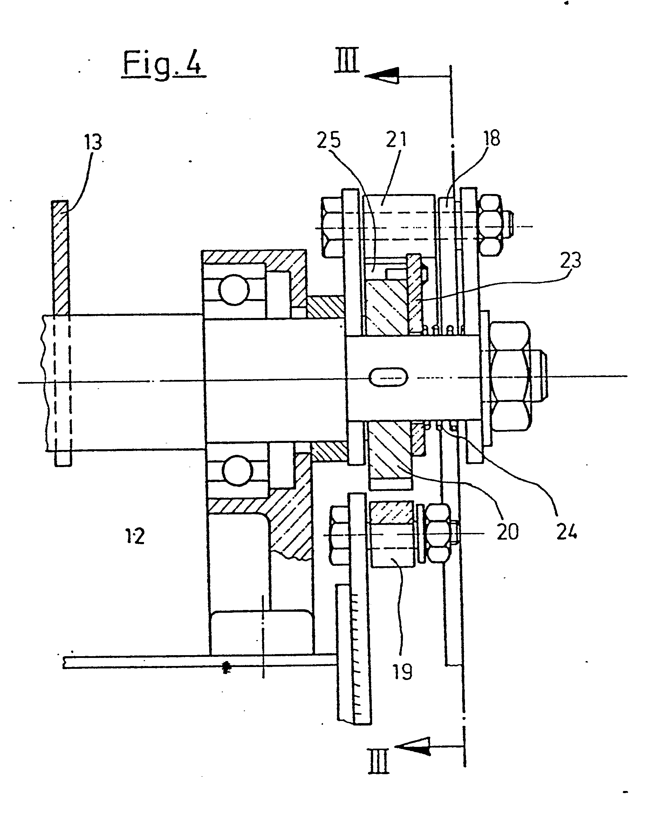

Ferner ist es möglich, die Schaltwelle 12 direkt durch eine Hydraulik zu betätigen, wobei anstelle der Gewindedruckstange ein Druckzylinder erforderlich ist mit einem besonderen Hydraulikanschluß. Besonders vorteilhaft ist es, wenn die Drehvorrichtung für die Schaltwelle 12 aus einem Stufenantrieb mit Klinkengesperre und Zackenrad besteht (Figur 3, 4) und wenn der Antrieb über eine Zugstange 18 von der vorhandenen hydraulischen Hebevorrichtung für die Aufnahmevorrichtung 16 betätigt wird. In diesem Fall ist kein zusätzlicher Hydraulikzylinder mit eigenem Anschluß und Ventil erforderlich. Eine Schnittbreitenverstellung erfolgt im gezeigten Beispiel jedes Mal sobald die Aufnahmevorrichtung 16 einmal angehoben und abgesenkt wird. Die Anzahl des Anhebens und Absenkens der Aufnahmevorrichtung zum Erreichen einer Schnittbreitenverstellung richtet sich nach der Anordnung der Kurvenscheibe. Es kann auch eine andere Anordnung gewählt werden, wobei mehrmals auf- und abgesenkt werden muß und wobei die Abstimmung des Ausschwenkens der nachfolgenden Messer verfeinert werden kann.

Figur 3 zeigt schematisch eine Seitenansicht einer derartigen Drehvorrichtung. Mit 12 ist wieder die Schaltwelle bezeichnet, die mit einem Zackenrad 20 versehen ist. Zur Einstellung und Vorwahl der gewünschten Schnittlänge ist neben dem Zackenrad 20 ein Stellsegment 23 angeordnet, das über eine Druckfeder 24 gegen das Zackenrad gedrückt wird und an der vorgewählten Zahnlücke 25 einrastet (Figur 4). Ein kurzer Bogen I deckt dabei diese Zahnlücken so ab, daß die Vorschubklinke 21 nicht einrasten kann und die so eingestellte Schnittlänge erhalten bleibt. Eine Betätigung der mit der Aufnahmevorrichtung verbundenen Zugstange 18 verdreht die Schaltwelle über die Klinke 21 um einen Schritt, so daß die Kurvenscheiben 13 auf die Schaltrollen 11 einer Anzahl von Messern 8 einwirken und diese ausschwenken. Vorteilhafterweise kann dem Stellsegment 23 eine nicht dargestellte Vorwahlskala zugeordnet sein, woraus ersichtlich ist, wie weit das Stellsegment gedreht werden muß um eine gewünschte Schnittlänge zu erhalten. Das Stellsegment 23 kann auch in die Lage gebracht werden, wobei sämtliche Messer im Eingriff bleiben und das während des Betriebs erforderliche Auf- und Abschwenken der Aufnahmevorrichtung keine Verdrehung der Schaltwelle hervorruft. Das Stellsegment 23 wird dabei so eingestellt, daß die Klinke 21 nicht zum Eingriff in das Zackenrad 20 kommt. Beim Verdrehen der Schaltwelle 12 werden die Messerhebel 9 entgegen ihrer Beaufschlagung durch die Federn M nach rechts verdreht, d.h. die Schaltrollen 11 üben eine Druckkraft auf die Kurvenscheiben 13 aus, die entgegen der Drehrichtung der Schaltwelle 12 gerichtet ist. Um ein Zurückdrehen der Schaltwelle 12 infolge dieser Druckkraft beim Zurückführen der Klinke 21 zu vermeiden, ist es erforderlich, zusätzlich eine Rückhalteklinke 19 dem Zackenrad 20 zuzuordnen. Die Rückhalteklinke ist dabei mit einem Federelement in Verbindung, welches sie immer in Anlage an das Zackenrad hält.

Nachdem alle Messer ausgeschwenkt sind, kann durch ein Weiterdrehen der Schaltwelle 12 ein vollständiges Einschwenken sämtlicher Messer 8 in den Förderkanal 3 erfolgen, wobei diese jedoch unter dem Einfluß der mit den Messerrollen verbundenen Vorspannfedern M diese schlagartig in die Schneidstellung vorschnellenwürden. Um dies zu verhindern, ist an der Schaltwelle 12 eine nicht dargestellte Bremsvorrichtung angeordnet, die in diesem letzten Drehwinkelbereich wirksam wird, wodurch die Bewegung der in den Förderkanal 3 vorspringenden Messer 8 verlangsamt wird.

Die Erfindung schafft also ein Schneidwerk, daß ein Einstellen der Schnittlänge auf vorgewählte Wärte durch Ausschwenken einzelner oder aller Messer einer oder mehrerer Messergruppen aus der Arbeitsstellung in eine Außerbetriebsstellung durch einfaches Anheben oder Absenken der Aufnahmevorrichtung erlaubt. Die Fremdkörpersicherung durch Ausschwenken der einzelnen Messer über die ganze Förderkanalbreite beim Auftreffen eines Hindernisses und selbsttätige Rückstellung nach dem Passieren des Hindernisses ermöglicht ein Einhalten der einmal eingestellten Schnittbreite. Die einfache und kompakte Ausführung der Schaltwelle ermöglicht ein sicheres, schnelles Ändern der Schnittlängen ohne physischen Kraftaufwand.

**Patentansprüche**

1. Schneidwerk für Selbstlade-Erntewagen, das in einem der Aufnahme von Halmgut dienenden Förderkanal (3) vorgesehen ist und das eine Vielzahl von in ihrer Schneidstellung in den Förderkanal (3) ragenden und in mindestens einer Reihe angeordneten sowie schwenkbar gelagerten Messern (6, 8) enthält, die mittels federbelasteter Messerhebel (7, 9) in ihrer Schneidstellung gehalten werden und entgegen der Federbelastung bis zu einer Stellung verschwenkbar sind, in der sie keine Schneidwirkung auf das Halmgut ausüben, wobei die Messerhebel (9) wenigstens einer Messerreihe in etwa ihrer Mitte drehbar an einem festen Bolzen (10) gelagert sind, dadurch gekennzeichnet, daß dieser Messerreihe eine Schaltwelle (12) zugeordnet ist, die mit einer der Anzahl der Messer (8) entsprechenden Anzahl von direkt den Messerhebeln (9) zugeordneten Kurvenscheiben (13, 13', 13'') versehen ist, wobei die Kurvenscheiben (13, 13', 13'') in bezug auf den Umfang der Schaltwelle (12) versetzt zueinander angeordnet sind, und daß die Schaltwelle (12) mit einer Drehvorrichtung verbunden ist.

2. Schneidwerk nach Anspruch 1, dadurch gekennzeichnet, daß jede Kurvenscheibe (13, 13', 13'') eine Hubkurve, einen zentrischen Teil und eine Senkkurve (S) aufweist.

3. Schneidwerk nach Ansprüchen 1 und 2, dadurch gekennzeichnet, daß die Drehvorrichtung für die Schaltwelle (12) ein Stirnrad- oder Schneckenradgetriebe aufweist.

4. Schneidwerk nach Ansprüchen 1 und 2, dadurch gekennzeichnet, daß die Drehvorrichtung für die Schaltwelle (12) eine Gewindezug- oder Druckstange mit Handratsche aufweist.

5. Schneidwerk nach Ansprüchen 1 und 2, dadurch gekennzeichnet, daß die Drehvorrichtung eine Gewindezug- oder Druckstange mit einem Druckzylinder aufweist.

6. Schneidwerk nach Ansprüchen 1 und 2, dadurch gekennzeichnet, daß die Drehvorrichtung einen Stufenantrieb mit einem Klinkengesperre und einem Zackenrad (20) aufweist, die über eine Zugstange (18) mit der über Hydraulikzylinder verschwenkbaren Aufnahmevorrichtung (16) für das Halmgut verbunden sind.

7. Schneidwerk nach Anspruch 6, dadurch gekennzeichnet, daß dem Zackenrad (20) ein drehbares Stellsegment (23) zugeordnet ist, das unter der Kraft einer Feder (24) am Zackenrad anliegt und in dieses einrastbar ist, wobei das Stellsegment einen Abschnitt aufweist, welcher mindestens die Breite einer Zahnlücke (25) des Zackenrades (20) aufweist und im Bereich dieses Abschnitts über die äußere Kante des Zackenrades hinausragt und in den Wirkungsbereich einer Vorschubklinke (21) eingreift.

8. Schneidwerk nach Ansprüchen 1 bis 7, dadurch gekennzeichnet, daß die Messerreihe aus mehreren Messergruppen besteht und daß die Kurvenscheiben (13, 13', 13'') jeder Messergruppe derart zueinander versetzt sind, daß die Ausschwenkung der nächstfolgenden Messergruppe in eine Außerbetriebsstellung erst einsetzt, wenn die Ausschwenkung der vorhergehenden Gruppe erfolgt ist.

9. Schneidwerk nach Ansprüchen 1 bis 8, dadurch gekennzeichnet, daß die Schaltwelle (12) mit einer Bremsvorrichtung versehen ist.

## Claims

1. A cutting unit for a self-loading harvest wagon, which is provided in a conveyor channel (3) used for receiving therein culmiferous material and which comprises a plurality of pivotably supported cutting blades (6, 8) arranged in at least one row and projecting into said conveyor channel (3) in their cutting position, said cutting blades (6, 8) being held in their cutting position by means of spring-loaded cutting-blade levers (7, 9) and being adapted to be pivoted, opposite to the direction of spring action, up to and into a position in which they do not exert any cutting effect on the culmiferous material, and said cutting-blade levers (9) of at least one row of cutting blades being, approximately at the centre thereof, rotatably secured to a fixed pin (10), characterized in that this row of cutting blades has associated therewith a control shaft (12) provided with a number of cam plates (13, 13', 13'') which are directly associated with the cutting-blade levers (9), said number of cam plates corresponding to the number of cutting blades (8) and said cam plates (13, 13', 13'') being arranged such that they are displaced relative to one another with respect to the circumference of the control shaft (12), and that the control shaft (12) is connected to a rotating device.

2. A cutting unit according to claim 1, characterized in that each cam plate (13, 13', 13'') comprises an ascending curve, a central part and a desconding curve (S).

3. A cutting unit according to claims 1 and 2, characterized in that the rotating device for the control shaft (12) is provided with a spur gear unit or with a worm gear unit.

4. A cutting unit according to claims 1 and 2, characterized in that the rotating device for the control shaft (12) is provided with a threaded tie rod or push rod with a hand ratchet means.

5. A cutting unit according to claims 1 and 2, characterized in that the rotating device is provided with threaded tie rod or push rod with a pressure cylinder.

6. A cutting unit according to claims 1 and 2, characterized in that the rotating device is provided with a step drive means comprising a pawl locking means and a toothed wheel (20), said elements being connected via a tie rod (18) to the culmiferous material reception means (16) which is adapted to be pivoted through hydraulic cylinders.

7. A cutting unit according to claim 6, characterized in that the toothed wheel (20) has associated therewith a rotatable adjustment segment (23), which, due to the action of a spring (24), is in contact with said toothed wheel and which is adapted to be brought into locking engagement with said toothed wheel, said adjustment segment being provided with a portion which has at least the width of a tooth space (25) of said toothed wheel (20), and said adjustment segment projecting beyond the outer edge of the toothed wheel in the area of this portion and extending into the field of operation of an advancement pawl (21).

8. A cutting unit according to claims 1 to 7, characterized in that the row of cutting blades consists of a plurality of cutting blade groups and that the cam plates (13 13', 13'') of each cutting blade group are displaced relative to one another in such a way that the pivotal movement advancing the following cutting blade group into a nonoperative position will only start when the pivotal movement of the preceding group has taken place.

9. A cutting unit according to claims 1 to 8, characterized in that the control shaft (12) is provided with a brake means.

## Revendications

1- Dispositif de coupe pour véhicule de récolte auto-chargeur, prévu dans l'un des évidements du conduit d'acheminement (3) de l'herbage et comprenant une pluralîté de couteaux (6, 8) faisant saillie, en position de coupe, dans le conduit d'acheminement (3), montés pivotant et disposés sur au moins une rangée, lesdits couteaux étant maintenus dans leur position de coupe au moyen de leviers (7, 9) chargés par des ressorts et étant susceptibles de pivoter, à l'encontre de la charge des ressorts, vers une position dans laquelle ils n'éxercent aucune action de coupe sur l'herbage, les leviers (9) d'au moins une rangée de couteaux étant montés rotatifs, à peu près en leur milieu, autour d'un boulon fixe (10), caractérisé en ce qu'à cette rangée de couteaux est associé un arbre de commande (12) pourvu de disques à cames (13, 13,, 13'') en nombre correspondant au nombre de couteaux (8) et affectés directement aux leviers (9) des couteaux, les disques à cames (13, 13', 13'') étant montés décalés l'un par rapport à l'autre, à la périphérie de l'arbre de commande (12), et en ce que l'arbre de commande (12) est relié à un dispositif d'entraînement en rotation.

2- Dispositif de coupe selon la revendication 1, caractérisé en ce que chaque disque à came (13, 13', 13'') comporte une courbe montante, une partie centrale et une courbe descendante (S).

3- Dispositif de coupe selon les revendications 1 et 2, caractérisé en ce que le dispositif d'entraînement en rotation de l'arbre de commande (12) comporte un engrenage droit ou à vis sans fin.

4- Dispositif de coupe selon les revendications 1 et 2, caractérisé en ce que le dispositif d'entraînement en rotation de l'arbre de commande (12) comporte une tige filetée de tirage ou de poussée, munie d'un cliquet manuel.

5- Dispositif de coupe selon les revendications 1 et 2, caractérisé en ce que le dispositif d'entraînement en rotation comporte une tige filetée de tirage ou de poussée, munie d'un vérin.

6- Dispositif de coupe selon les revendications 1 et 2, caractérisé en ce que le dispositif d'entraînement en rotation comporte un mécanisme de commande à gradins muni d'un verrouillage à cliquet et d'une roue dentée (20) reliés, par une tirette (18), au dispositif d'absorption (16) de l'herbage animé d'un mouvement oscillant sous l'action d'un vérin hydraulique.

7- Dispositif de coupe selon la revendication 6, caractérisé en ce qu'un segment de réglage (23) rotatif adjacent à la roue dentée (20), s'appuie contre la roue dentée sous la force d'un ressort (24) et est susceptible de s'encliqueter dans cette dernière, le segment de réglage comprenant un talon qui présente au moins la largeur d'un entredent (25) de la roue dentée (20), fait saillie du bord extérieur de la roue dentée, dans la région de ce talon, et s'engage dans la zone d'action d'un cliquet d'avancement (21).

8- Dispositif de coupe selon les revendications 1 à 7, caractérisé en ce que la rangée de couteaux comprend plusieurs groupes de couteaux et en ce que les disques à cames (13, 13', 13'') de chaque groupe de couteaux sont décalés l'un par rapport à l'autre de telle manière que le pivotement du groupe de couteaux suivant vers une position hors service n'est réalisé que lorsque le pivotement du groupe précédent est obtenu.

9- Dispositif de coupe selon les revendications 1 à 8 caractérisé en ce que l'arbre de commande (12) est muni d'un dispositif de freinage.

Fig.1

0 077 474

Fig.2

0 077 474

Fig. 3

0 077 474

Fig.4